# EUROPÄISCHE PATENTANMELDUNG

(11) **EP 1 738 857 A1**
(43) Veröffentlichungstag der Anmeldung: **03.01.2007**
(21) Anmeldenummer: 06010506.1
(22) Anmeldetag: 22.05.2006
(51) Int. Cl.: B23K 20/12

(54) **Vorrichtung und Verfahren zum Reibrührschweissen mit einer Zuführeinrichtung zum Einbringen eines Zuschlagstoffes in die Schweissnaht**

(30) Priorität: 27.06.2005 DE 102005029881
(71) Anmelder: GKSS-Forschungszentrum Geesthacht GmbH, 21502 Geesthacht (DE)
(72) Erfinder: Zettler, Rudolph, 21502 Geesthacht (DE); Sheikhi, Shahram, 21039 Eschenburg (DE); Beyer, Mathias, 21391 Reppenstedt (DE); Dos Santos, Dr. Jorge, 21395 Avendorf (DE); Roos, Arne, 21483 Juliusburg (DE); Loitz, Henry, 22043 Hamburg (DE)
(74) Vertreter: UEXKÜLL & STOLBERG

(57) **Zusammenfassung**

Dargestellt und beschrieben ist eine Vorrichtung (1B) zum Reibrührschweißen mit einem Stift (3) und einem ersten Reibflächensegment (4), wobei der Stift (3) und das erste Reibflächensegment (4) um eine Drehachse (6) drehend angetrieben sein können und wobei das erste Reibflächensegment (4) eine erste Reibfläche (5) zur Anlage an ein Werkstück aufweist, sowie ein Verfahren zum Reibrührschweißen. Die Aufgabe, eine Vorrichtung (1B) und ein Verfahren zum Reibrührschweißen bereitzustellen, wodurch die Eigenschaften der Schweißnaht besser eingestellt werden können, wird dadurch gelöst, dass eine Zuführeinrichtung (10,11,11',12) zum Einbringen eines Zuschlagstoffes in die Schweißnaht vorgesehen ist.

## Beschreibung

Die vorliegende Erfindung betrifft eine Vorrichtung zum Reibrührschweißen mit einem Stift und einem ersten Reibflächensegment, wobei der Stift und das erste Reibflächensegment um eine Drehachse drehend angetrieben sind und wobei das erste Reibflächensegment eine erste Reibfläche zur Anlage an ein Werkstück aufweist, sowie ein Verfahren zum Reibrührschweißen.

Das Prinzip des Reibschweißens ist seit vielen Jahren aus dem Stand der Technik bekannt und beinhaltet, dass eine Relativbewegung zwischen zwei Werkstücken stattfindet, während diese entlang einer Berührungslinie gegeneinander gepresst' werden. Durch die Reibung wird ein plastifizerter Bereich entlang der Berührungslinie erzeugt, so dass sich bei einem Stopp der Relativbewegung der plastifizierte Bereich verfestigen kann und sich die Werkstücke miteinander verbinden. Diese Technik ist insbesondere beim Schweißen von Aluminium und seinen Legierungen von Vorteil. Bei herkömmlichen Schweißtechniken können sich bei diesen Werkstoffen zusammen mit dem Luftsauerstoff Oxide bilden, die verhindern, dass sich eine Schweißnaht mit hinreichender Festigkeit bildet. Dagegen tritt dieser störende Effekt der Oxidbildung beim Reibschweißen nicht auf.

Nachteilig am Reibschweißen ist jedoch, dass eine Relativbewegung der zu verbindenden Werkstücke erforderlich ist. Dies ist besonderes dann ein Problem, wenn große Werkstücke miteinander verbunden werden sollen, da dann Vorrichtungen und Aufnahmen erforderlich sind, die die gesamten Werkstücke halten und gegeneinander bewegen müssen. Um dieses Problem zu vermeiden, ist man zum Reibrührschweißen (Friction Stir Welding; FSW) übergegangen. Aus der WO 93/10935 ist bekannt, einen Stift in den Stoß zwischen aneinander angrenzende und zu verbindende Werkstücke einzuführen und diesen in Rotation zu versetzen, wobei der Stift eine größere Härte und einen höheren Schmelzpunkt als das Material der Werkstücke aufweist. Während der Rotation des Stifts werden die Werkstücke gegeneinander gepresst, so dass durch die Reibung zwischen dem Stift und den Werkstücken der Randbereich beider Werkstücke plastifiziert wird. Wird der Stift an dem Stoß entlang weiter bewegt, erstarrt das plastifizierte Material wieder und es kann so eine Schweißnaht erzeugt werden.

Um eine hinreichende Reibung auch im oberflächennahen Bereich des Stoßes zu erreichen, hat es sich als vorteilhaft erwiesen, oberhalb und/oder unterhalb des Stifts Schultern vorzusehen, die auf einer Oberfläche der zu verbindenden Werkstücke aufliegen und zusammen mit dem Stift ebenfalls an dem Material reiben. Aus der US 6,199,745 ist dazu bekannt, die Kraft, mit der die Schultern gegen die Oberseite und die Unterseite der Werkstücke gepresst werden, getrennt zu regeln, um eine optimale Wärmeverteilung über die Querschnittsfläche des Stoßes zu erreichen.

Auch die US 6,758,382 offenbart, die Drücke, mit denen die obere und die untere Schulter gegen die Oberflächen des Werkstücks gepresst werden, sowie die Position der Schultern relativ zu den Werkstücken zu regeln. Darüber hinaus ist die untere Schulter lösbar mit dem Stift verbunden, so dass diese leicht entfernt werden kann und die Vorrichtung auch in solchen Fällen einsetzbar ist, in denen die Werkstücke auf einer Unterlage aufliegen.

Ein weiteres Problem besteht darin, dass die Eigenschaften der Schweißnaht durch die Temperaturverteilung und den durch die Reibung zwischen Stift und Schulter(n) sowie den Werkstücken verursachten Materialtransport bestimmt werden. Somit können die Eigenschaften der Schweißnaht nur durch eine Veränderung der Drehzahl von Stift und Schulter(n) sowie der Geschwindigkeit, mit der der Stift linear entlang des Stoßes bewegt wird, beeinflusst werden, so dass eine gezielte Beeinflussung der Eigenschaften daher nur eingeschränkt möglich ist.

In bestimmten Fällen ist es jedoch erforderlich, nicht nur den Parameter der über Reibung eingebrachten Energie zu verändern, sondern es kann notwendig sein, auf die Stöchiometrie im Bereich der Schweißnaht Einfluss zu nehmen, um die Eigenschaften der Schweißnaht zu verbessern.

Daher liegt der vorliegenden Erfindung die Aufgabe zugrunde, eine Vorrichtung und ein Verfahren zum Reibrührschweißen bereitzustellen, wodurch die Eigenschaften der Schweißnaht besser eingestellt werden können.

Diese Aufgabe wird vorrichtungsmäßig dadurch gelöst, dass eine Zuführeinrichtung zum Einbringen eines Zuschlagstoffes in die Schweißnaht vorgesehen ist.

Durch die Zuführeinrichtung wird ermöglicht, gezielt die Eigenschaften der Schweißnaht beeinflussende Zuschlagstoffe einzubringen, wodurch die mechanischen Eigenschaften des zwischenzeitlich plastifizierten Bereichs verbessert werden können. Insbesondere können die Zugfestigkeit, die spätere Schweißbarkeit in dem zwischenzeitlich plastifizierten Bereich, die Korrosionsbeständigkeit und die Bruchfestigkeit lokal verändert werden. Dabei ist es besonders vorteilhaft, dass diese Beeinflussung lokal begrenzt bleibt. Die erfindungsgemäße Vorrichtung kann daher nicht nur zum Verbinden zweier Werkstücke eingesetzt werden, sondern es ist auch möglich, diese zur definierten Modifikation begrenzter Abschnitte einzusetzen.

Im Falle des Reibrührschweißens von Werkstücken aus Aluminium oder Legierungen davon kann es sich bei den Zuschlagsstoffen insbesondere um Kupfer, Mangan, Silizium, Magnesium, Zink oder Aluminiumoxid handeln. Dabei ist Kupfer mit dem Vorteil verbunden, dass es die Zugfestigkeit im Bereich der Schweißnaht erhöht. Mangan erhöht die Festigkeit, ohne dass es dabei zu einem Verlust der Duktilität kommt. Wird Silizium in den Bereich der Schweißnaht eingebracht, reduziert dies die Schmelztemperatur des die Schweißnaht bildenden Materials. Magnesium als Zuschlagsstoff ist mit dem Vorteil verbunden, dass es die Festigkeit und Korrosionsbeständigkeit des Materials der Schweißnaht im Vergleich zum Aluminium der zu verbindenden Werkstücke erhöht. Zink und Magnesium erhöhen zudem die Zugfestigkeiten. Aluminiumoxid als Zuschlagsstoff führt schließlich zu einer Verbesserung der Oberflächenhärte und der Verschleißfestigkeit sowie zu einer Erhöhung der Festigkeit.

In einer bevorzugten Ausgestaltung ist die Zuführeinrichtung als Außenkanal ausgebildet, der eine Austrittsöffnung aufweist, die benachbart zu der äußeren parallel zu dem Stift verlaufenden Oberfläche des ersten Reibflächensegments angeordnet ist. Dadurch kann der Zuschlagsstoff in einfacher Weise ohne großen konstruktiven Aufwand dem plastifizierten Bereichs zugeführt werden.

In einer weiteren bevorzugten Ausführungsform wird der Zuschlagsstoff in das Innere des plastifizierten Bereichs eingebracht, indem die Zuführeinrichtung als Zentralkanal in dem Stift ausgebildet ist, der Zentralkanal eine Austrittsöffnung aufweist und die Austrittsöffnung in dem über die erste Reibfläche vorstehenden Teil des Stifts angeordnet ist. Auf diese Weise können gezielt die Volumeneigenschaften der Schweißnaht beeinflusst werden. Dabei kann der eingebrachte Zuschlagsstoff von dem Stift aus weiter in den plastifizierten Bereich diffundieren.

Dabei ist es besonders bevorzugt, wenn der Zentralkanal einen ersten Abschnitt, der in Erstreckungsrichtung des Stifts parallel zu der Drehachse verläuft, und einen Endabschnitt aufweist, der sich von dem Ende des ersten Abschnitts zu der Umfangsfläche des Stifts erstreckt. Durch den Zentralkanal, der mit der Drehachse des Stifts zusammenfällt, ist es nicht erforderlich, technisch aufwendige Durchführungen vorzusehen.

Alternativ oder zusätzlich kann der Zuschlagsstoff auch auf die Oberfläche des plastifizierten Bereichs aufgebracht werden, so dass insbesondere die Zusammensetzung des oberflächennahe Teils der Schweißnaht modifiziert werden kann. Dazu ist in einer bevorzugten Ausführungsform die Zuführeinrichtung als Reibflächenkanal ausgebildet, der eine Austrittsöffnung aufweist, die in dem ersten Reibflächensegment vorgesehen ist und in der ersten Reibfläche angeordnet ist. Dies ist mit dem Vorteil verbunden, dass der Zuschlagsstoff nach dem Aufbringen auf die Oberfläche durch das über den plastifizierten Bereich streichende erste Reibflächensegment verteilt wird.

Weiterhin ist es bevorzugt, wenn die Zuführeinrichtung durch einen inneren Spalt gebildet wird, der zur Drehachse hin an das erste Reibflächensegment angrenzt. In diesem Fall kann auf Durchführungen für den Zuschlagsstoff verzichtet werden. Der gleiche Vorteil ergibt sich, wenn die Zuführeinrichtung durch einen äußeren Spalt gebildet wird, der zwischen dem ersten Reibflächensegment und einem ersten Außensegment ausgebildet ist.

Die obige Aufgabe wird außerdem durch ein Verfahren zum Reibrührschweißen gelöst, bei dem ein erstes Werkstück bereitgestellt wird und bei dem ein Bereich des ersten Werkstücks durch einen um eine Drehachse rotierenden Stift plastifiziert wird, wobei ein Zuschlagsstoff in den plastifizierten Bereich eingebracht wird.

Die bereits im Zusammenhang mit der oben erwähnten Vorrichtung genannten Vorteile treffen gleichermaßen auf das Verfahren zu. Daher können mit dem erfindungsgemäßen Verfahren gezielt Materialeigenschaften eines Werkstücks lokal beeinflusst werden, und das Verfahren ist nicht auf das Verbinden zweier Werkstükke beschränkt.

In einer bevorzugten Ausführungsform des erfindungsgemäßen Verfahrens wird ein zweites Werkstück bereitgestellt, das zweite Werkstück wird entlang einer Verbindungsfläche an das erste Werkstück angelegt und ein Bereich des ersten Werkstücks und/oder des zweiten Werkstücks, der sich entlang der Verbindungsfläche erstreckt, wird plastifiziert. Auf diese Weise kann das erfindungsgemäße Verfahren zum Verschweißen zweier Werkstücke genutzt werden, und die Materialeigenschaften der Schweißnaht können durch die Zugabe von Zuschlagsstoffen gezielt beeinflusst werden.

Im Folgenden wird die Erfindung anhand einer lediglich bevorzugte Ausführungsbeispiele darstellenden Zeichnung erläutert. In der Zeichnung zeigen
- Fig. 1: ein erstes Ausführungsbeispiel einer Reibrührschweißvorrichtung gemäß der vorliegenden Erfindung und
- Fig. 2: ein zweites Ausführungsbeispiel einer erfindungsgemäßen Reibrührschweißvorrichtung.

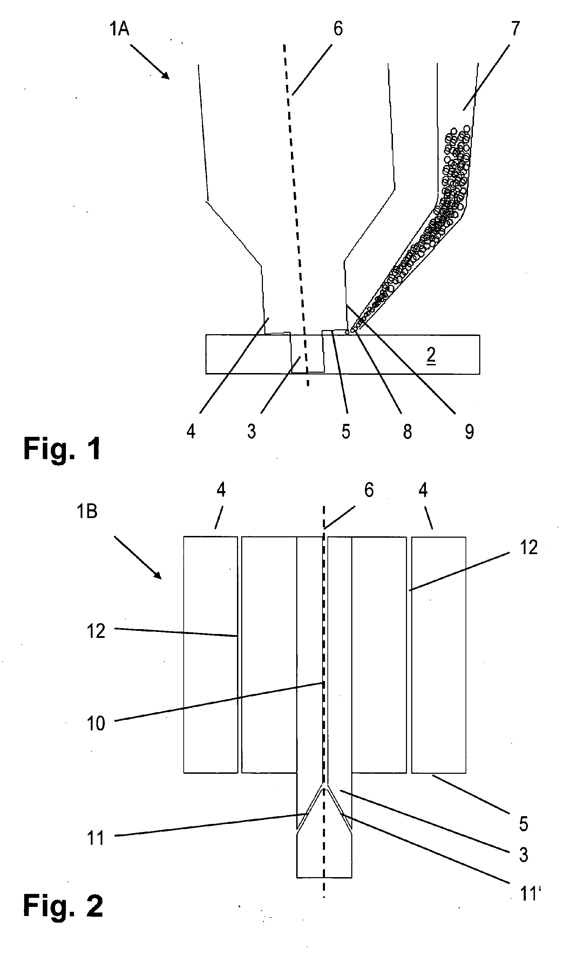

Fig. 1 zeigt ein erstes Ausführungsbeispiel einer erfindungsgemäßen Vorrichtung 1A zum Reibrührschweißen, die entlang des Stoßes geführt werden kann, entlang dessen zwei Werkstücken 2 aneinander anliegen. Die Vorrichtung 1A ist aber nicht auf die Verwendung zum Verbinden zweier Werkstücke beschränkt, sondern kann auch dazu eingesetzt werden, die Materialeigenschaften eines begrenzten Bereichs eines Werkstücks 2 zu modifizieren.

Die Vorrichtung 1A umfasst einen Stift 3 und ein erstes Reibflächensegment 4, wobei das erste Reibflächensegment 4 eine erste Reibfläche 5 aufweist, die an der Oberfläche des Werkstücks 2 anliegt. Sowohl das erste Reibflächensegment 4 als auch der Stift 3 sind um eine gemeinsame Drehachse 6 drehend angetrieben. Weiter umfasst die Vorrichtung 1A eine im vorliegenden Ausführungsbeispiel als Außenkanal 7 ausgebildete Zuführeinrichtung für einen Zuschlagstoff, wobei der Außenkanal 7 eine Austrittsöffnung 8 aufweist, die benachbart zu der äußeren, parallel zu dem Stift 3 verlaufenden Oberfläche 9 des Reibflächenelements 4 angeordnet ist.

Über den Außenkanal 7 kann ein Zuschlagstoff zwischen die Oberfläche des Werkstücks 2 und die erste Reibfläche 5 gebracht werden, so dass der Zuschlagstoff in die Schweißnaht eingebracht wird, die dadurch entsteht, dass der Stift 3 und die erste Reibfläche 5 bei Rotation um die Drehachse 6 durch Reibung einen Bereich des Werkstücks 2 zunächst plastifizieren und dieser sich anschließend wieder verfestigt. Im Falle des Reibrührschweißens von Werkstücken 2 aus Aluminium oder Legierungen davon kann es sich bei den Zuschlagsstoffen insbesondere um Kupfer, Mangan, Silizium, Magnesium, Zink oder Aluminiumoxid handeln.

Die Vorrichtung 1A kann auch in der Weise verwendet werden, dass ein zweites, nicht dargestelltes Werkstück bereitgestellt wird, dass das zweite Werkstück entlang einer Verbindungsfläche an das erste Werkstück 2 angelegt wird und dass ein Bereich des ersten Werkstücks 2 und/oder des zweiten Werkstücks, der sich entlang dieser Verbindungsfläche erstreckt, plastifiziert wird, in dem sich der rotierende Stift 3 entlang der Verbindungsfläche bewegt. Die Werkstücke werden währendessen gegeneinander gedrückt, so dass sich durch das Verfestigen des zwischenzeitlich plastifizierten Bereichs eine Schweißnaht bildet, deren Materialeigenschaften durch die Zugabe eines Zuschlagstoffes gezielt beeinflusst werden können.

Fig. 2 zeigt ein zweites Ausführungsbeispiel einer erfindungsgemäßen Vorrichtung. Die Vorrichtung 1B umfasst wiederum einen Stift 3 sowie ein erstes Reibflächensegment 4, das eine erste Reibfläche 5 zur Anlage an ein Werkstück 2 aufweist. Dabei ist das erste Reibflächensegment 4 kreisringförmig ausgebildet und umgibt den Stift 3. Der Stift 3 und das erste Reibflächensegment 4 sind um eine gemeinsame Drehachse 6 drehend angetrieben. In diesem, insoweit bevorzugten Ausführungsbeispiel ist die Zuführeinrichtung zum einen als ein in dem Stift 3 verlaufender Zentralkanal ausgebildet, der einen ersten Abschnitt 10 aufweist, der in Erstreckungsrichtung des Stifts 3 parallel zu der Drehachse 6 verläuft, und Endabschnitte 11, 11', die sich von dem Ende des ersten Abschnitts 10 zu der Umfangsfläche des Stifts 3 erstrecken. Damit ist die Austrittsöffnung in dem über die erste Reibfläche (5) vorstehenden Teil des Stifts (3) angeordnet.

Zum anderen umfasst die Zuführeinrichtung Reibflächenkanäle 12, die in dem Reibflächensegment 4 vorgesehen sind und deren Austrittsöffnung in der ersten Reibfläche 5 angeordnet ist. Durch den Zentralkanal mit dem in der Umfangsfläche des Stifts 3 endenden Endabschnitten 11, 11' kann ein Zuschlagstoff in das Innere des durch den Stift 3 plastifizierten Bereichs des Werkstücks 2 eingebracht werden, während durch die Reibflächenkanäle 12 Zuschlagstoffe in den oberflächennahen Bereich der Schweißnaht eingebracht werden können. Im letzteren Fall wird die Verteilung des Zuschlagstoffes über die Oberfläche durch die rotierende Bewegung der ersten Reibfläche 5 unterstützt.

Neben der Möglichkeit, entweder einen Außenkanal 7 oder einen Zentralkanal bzw. Reibflächenkanäle 12 vorzusehen, kann der Zuschlagstoff gemäß der vorliegenden Erfindung auch durch einen Spalt zugeführt werden, der zur Drehachse 6 hin an das erste Reibflächensegment 4 angrenzt. Dies bezieht sich insbesondere auf einen Spalt zwischen dem ersten Reibflächensegment 4 und dem Stift 3. Alternativ ist es auch möglich, dass ein erstes Außensegment (nicht dargestellt) vorgesehen ist, das das erste Reibflächensegment 4 umgibt, und dass der Zuschlagstoff durch einen äußeren Spalt eingebracht wird, der zwischen dem ersten Reibflächensegment 4 und einem ersten Außensegment ausgebildet ist.

Zwei Werkstücke 2 können entlang einer Verbindungsfläche in der Weise miteinander verbunden werden, dass ein benachbart zu der Verbindungsfläche angeordneter Bereich des ersten Werkstücks 2 und/oder des zweiten Werkstücks durch den um die Drehachse 6 rotierenden Stift plastifiziert wird. Dabei ist es zum einen denkbar, dass die Verbindungsfläche entlang des Stoßes verläuft, an dem die beiden Werkstücke aneinander anliegen. In diesem Fall wird die Vorrichtung 1A bzw. 1B mit dem Stift 3 und dem Reibflächensegment 4, die um die Drehachse 6 rotieren, entlang der Verbindungsfläche bewegt, so dass die Bereiche in den beiden Werkstücken 2 plastifiziert werden, die an die Verbindungsfläche angrenzen. Bei der Bewegung der Vorrichtung 1A bzw. 1B entlang der Verbindungsfläche wird ein Zuschlagstoff in den plastifizierten Bereich eingebracht, wobei dies gemäß dem ersten, in Fig. 1 dargestellten Ausführungsbeispiel, durch den Außenkanal 7 erfolgt und der Zuschlagstoff durch die an dem äußeren Umfang des ersten Reibflächensegments 4 angeordnete Austrittsöffnung 8 auf die Oberfläche des plastifizierten Bereichs aufgebracht wird.

Wie in Fig. 1 gezeigt, wird der Stift 3 dabei bevorzugt derart zu dem ersten und zweiten Werkstück 2 geführt, dass die Drehachse 6 geneigt zu der Flächennormalen der Oberfläche der Werkstücke 2 verläuft. Der Stift 3 wird also geneigt geführt, so dass die erste Reibfläche 5 nicht vollständig auf den beiden Werkstücken 2 aufliegt. Auf diese Weise kann der Zuschlagstoff unter die erste Reibfläche 5 gebracht werden, so dass sich dieser gut auf der Oberfläche des plastifizierten Bereichs verteilen kann.

Wird eine Vorrichtung 1B gemäß dem zweiten Ausführungsbeispiel verwendet, die in Fig. 2 gezeigt ist, kann der Zuschlagstoff zum einen in das Innere des plastifizierten Bereichs eingebracht werden, in dem dieser durch den Zentralkanal mit dem ersten Abschnitt 10 und den Endabschnitten 11, 11' zugeführt wird. Zum anderen kann der Zuschlagstoff auch auf die Oberfläche des plastifizierten Bereichs aufgebracht werden, indem dieser durch die Reibflächenkanäle 12 geführt wird. Dabei ist es denkbar, dass in das Innere der Schweißnaht ein anderer Zuschlagstoff eingebracht wird als auf die Oberfläche.

Die erfindungsgemäßen Vorrichtungen 1A, 1B ermöglichen somit, die Materialeigenschaften begrenzter Bereiche eines Werkstücks 2 oder die einer Schweißnaht gezielt zu verändern oder zu beeinflussen.

## Patentansprüche

1. Vorrichtung zum Reibrührschweißen mit einem Stift (3) und einem ersten Reibflächensegment (4), wobei der Stift (3) und das erste Reibflächensegment (4) um eine Drehachse (6) drehend angetrieben sind und wobei das erste Reibflächensegment (4) eine erste Reibfläche (5) zur Anlage an ein Werkstück (2) aufweist, **dadurch gekennzeichnet, dass** eine Zuführeinrichtung zum Einbringen eines Zuschlagstoffes in einen plastifizierten Bereich vorgesehen ist.

2. Vorrichtung nach Anspruch 1, **dadurch gekennzeichnet, dass** die Zuführeinrichtung als Außenkanal (7) ausgebildet ist, der eine Austrittsöffnung (8) aufweist, die benachbart zu der äußeren parallel zu dem Stift (3) verlaufenden Oberfläche des ersten Reibflächensegments (4) angeordnet ist.

3. Vorrichtung nach Anspruch 1 oder 2, **dadurch gekennzeichnet, dass** die Zuführeinrichtung als Zentralkanal in dem Stift (3) ausgebildet ist, dass der Zentralkanal eine Austrittsöffnung aufweist und dass die Austrittsöffnung in dem über die erste Reibfläche (5) vorstehenden Teil des Stifts (3) angeordnet ist.

4. Vorrichtung nach Anspruch 3, **dadurch gekennzeichnet, dass** der Zentralkanal einen ersten Abschnitt (10) aufweist, der in Erstreckungsrichtung des Stifts (3) parallel zu der Drehachse (6) verläuft, und dass der Zentralkanal einen Endabschnitt (11, 11') aufweist, der sich von dem Ende des ersten Abschnitts (10) zu der Umfangsfläche des Stifts (3) erstreckt.

5. Vorrichtung nach einem der Ansprüche 1 bis 4, **dadurch gekennzeichnet, dass** die Zuführeinrichtung als Reibflächenkanal (12), der eine Austrittsöffnung aufweist, die in dem ersten Reibflächensegment (4) vorgesehen ist und dass die Austrittsöffnung in der ersten Reibfläche (5) angeordnet ist.

6. Vorrichtung nach einem der Ansprüche 1 bis 5, **dadurch gekennzeichnet, dass** die Zuführeinrichtung durch einen inneren Spalt gebildet ist, der zur Drehachse (6) hin an das erste Reibflächensegment (4) angrenzt.

7. Vorrichtung nach einem der Ansprüche 1 bis 6, **dadurch gekennzeichnet, dass** ein erstes Außensegment (15) vorgesehen ist, dass das erste Außensegment (15) das erste Reibflächensegment (4) umgibt und dass die Zuführeinrichtung durch einen äußeren Spalt gebildet wird, der zwischen dem ersten Reibflächensegment (4) und dem ersten Außensegment (15) ausgebildet ist.

8. Verfahren zum Reibrührschweißen, wobei ein erstes Werkstück (2) bereitgestellt wird und wobei ein Bereich des ersten Werkstücks durch einen um eine Drehachse (6) rotierenden Stift (3) plastifiziert wird, **dadurch gekennzeichnet, dass** ein Zuschlagsstoff in den plastifizierten Bereich eingebracht wird.

9. Verfahren nach Anspruch 8, **dadurch gekennzeichnet, dass** ein zweites Werkstück bereitgestellt wird, dass das zweite Werkstück entlang einer Verbindungsfläche an das erste Werkstück angelegt wird und dass ein Bereich des ersten Werkstücks und/oder des zweiten Werkstücks, der sich entlang der Verbindungsfläche erstreckt, plastifiziert wird.

10. Verfahren nach einem der Anspruch 8 oder 9, **dadurch gekennzeichnet, dass** der Zuschlagsstoff in das Innere des plastifizierten Bereichs eingebracht wird.

11. Verfahren nach Anspruch 10, **dadurch gekennzeichnet, dass** der Zuschlagsstoff durch einen Zentralkanal in dem Stift (3) geführt wird.

12. Verfahren nach einem der Ansprüche 8 bis 11, **dadurch gekennzeichnet, dass** der Zuschlagsstoff auf die Oberfläche des plastifizierten Bereichs aufgebracht wird.

13. Verfahren nach Anspruch 12, **dadurch gekennzeichnet, dass** ein Reibflächensegment (4) mit einer Reibfläche (5) um die Drehachse (6) rotiert wird, die zumindest teilweise auf den Werkstücken aufliegt, und dass der Zuschlagsstoff auf die zur Reibfläche (5) weisende Oberfläche der Werkstücke (2) aufgebracht wird.

14. Verfahren nach Anspruch 13, **dadurch gekennzeichnet, dass** der Stift (3) derart zu dem ersten und dem zweiten Werkstück geführt wird, dass die Drehachse (6) geneigt zu der Flächennormalen der Oberfläche der Werkstücke (2) verläuft.

15. Verfahren nach Anspruch 13 oder 14, **dadurch gekennzeichnet, dass** der Zuschlagsstoff durch einen Reibflächenkanal (12) durch das Reibflächensegment (4) geführt wird.

16. Verfahren nach einem der Ansprüche 13 bis 15, **dadurch gekennzeichnet, dass** der Zuschlagsstoff durch einen an das Reibflächensegment (4) angrenzenden Spalt geführt wird.

17. Verfahren nach Anspruch 16, **dadurch gekennzeichnet, dass** der Zuschlagsstoff durch einen Spalt zwischen dem Reibflächensegment (4) und einen Außensegment (15) geführt wird, das das Reibflächensegment (4) umgibt.

18. Verfahren nach einem der Ansprüche 8 bis 17, **dadurch gekennzeichnet, dass** es sich bei dem Zuschlagsstoff um einen aus der Liste umfassend Kupfer, Mangan, Silizium, Magnesium, Zink und Aluminiumoxid handelt.
